Europäisches Patentamt

European Patent Office

Office européen des brevets

(19)

(11) Veröffentlichungsnummer : **0 350 658 B1**

(12) **EUROPÄISCHE PATENTSCHRIFT**

(45) Veröffentlichungstag der Patentschrift :
22.01.92 Patentblatt 92/04

(51) Int. Cl.$^5$ : **C10J 3/50**

(21) Anmeldenummer : **89111092.6**

(22) Anmeldetag : **19.06.89**

(54) **Verfahren zur Ermittlung und Steuerung des Brennstoff-Massenstromes bei der Partialoxidation (Vergasung) von feinkörnigen bis staubförmigen Brennstoffen.**

(30) Priorität : **14.07.88 DE 3823773**

(43) Veröffentlichungstag der Anmeldung :
**17.01.90 Patentblatt 90/03**

(45) Bekanntmachung des Hinweises auf die
Patenterteilung :
**22.01.92 Patentblatt 92/04**

(84) Benannte Vertragsstaaten :
**DE ES GB NL SE**

(56) Entgegenhaltungen :
**DE-A- 2 554 565**
**GB-A- 2 059 377**
**GB-A- 2 103 387**

(73) Patentinhaber : **Krupp Koppers GmbH**
**Altendorfer Strasse 120**
**W-4300 Essen 1 (DE)**

(72) Erfinder : **Baumann, Hans-Richard**
**Georg-Baur-Ring 7**
**W-4300 Essen 1 (DE)**
Erfinder : **Linke, Adolf**
**Bellenbergsteig 47 b**
**W-4300 Essen 16 (DE)**
Erfinder : **Kuske, Eberhard, Dr.**
**Menzelstrasse 5**
**W-4300 Essen 1 (DE)**
Erfinder : **Schweimanns, Hans-Reiner**
**Kampstrasse 7**
**W-4320 Hattingen (DE)**

EP 0 350 658 B1

**Beschreibung**

Verfahren zur Ermittlung und Steuerung des Brennstoff-Massenstroms bei der Partialoxidation (Vergasung) von feinkörnigen bis staubförmigen Brennstoffen.

Die Erfindung betrifft ein Verfahren zur Ermittlung und Steuerung des Brennstoff-Massenstromes, der bei der Partialoxidation (Vergasung) von feinkörnigen bis staubförmigen Brennstoffen einem Vergaser mit mindestens zwei Brennern zugeführt wird, unter Anwendung einer radiometrischen Dichtemessung des mittels eines gasförmigen Mediums von einem zentralen Zuteilbehälter zu den einzelnen Brennern des Vergasers geförderten Brennstoffes sowie unter Einsatz von Prozeßrechnern zur Durchführung der notwendigen Rechenoperationen.

Bei der Partialoxidation von festen Brennstoffen, wie beispielsweise Braun- oder Steinkohlen bzw. Petrolkoksen, muß dafür gesorgt werden, daß die feinkörnigen bis staubförmigen Brennstoffe, die gegebenenfalls durch eine vorgeschaltete Aufmahlung auf die gewünschte Korngröße gebracht worden sind, mit den gas- bzw. dampfförmigen Reaktionsmedien in einem gleichmäßigen und mengenmäßig genau definierten Strom dem Vergaser zugeführt werden. Dies ist erforderlich, damit sich im Vergaser konstante Betriebsbedingungen einstellen, durch die eine gleichmäßige Qualität und Quantität des erzeugten Partialoxidationsgases gewährleistet wird. Als gas- bzw. dampfförmige Reaktionsmedien kommen dabei Sauerstoff und Luft bzw. mit Sauerstoff angereicherte Luft sowie gegebenenfalls zusätzlich Wasserdampf in Frage. Ist der Brennstoffanteil im Reaktionsgemisch im Vergaser zu gering, so bewirkt dies wegen des sich dann einstellenden zu hohen Sauerstoff : Brennstoff-Verhältnisses ein unerwünschtes Ansteigen der Betriebstemperatur im Vergaser. Ist dagegen umgekehrt der Brennstoffanteil im Reaktionsgemisch im Vergaser zu hoch, so hat dies eine unvollständige Reaktion des Brennstoffes mit den Oxidationsmitteln zur Folge. Es besteht dann die Möglichkeit, daß sich nicht umgesetzte Brennstoffpartikel im Vergaser ablagern oder zusammen mit dem erzeugten Gas aus dem Vergaser ausgetragen werden. Außerdem kann es dann unter Umständen zum Abreißen der Reaktion kommen. Schwankungen des dem Vergaser zugeführten Brennstoff-Massenstromes führen dabei notwendigerweise auch zu Schwankungen der Menge des erzeugten Partialoxidationsgases, was natürlich auch die nachgeschalteten Verbraucher dieses Gases beeinträchtigen kann. Das ist beispielsweise insbesondere der Fall, wenn das erzeugte Partialoxidationsgas zur Brenngasversorgung einer Gasturbine in einem dem Vergaser nachgeschalteten Gas- und Dampfturbinenkraftwerk genutzt werden soll. Hier muß im Interesse eines gleichmäßigen und ungestörten Kraftwerksbetriebes unbedingt sichergestellt sein, daß einerseits die zum Betrieb der Gasturbine erforderliche Brenngasmenge stets im ausreichenden Umfange zur Verfügung steht und daß andererseits bei einem Herunterfahren der Gasturbine die Brenngaszufuhr und damit die Vergaserleistung möglichst schnell und reibungslos gedrosselt werden können.

Aus den vorstehend genannten Gründen besteht deshalb die Notwendigkeit, den Brennstoff-Massenstrom, der den einzelnen Brennern eines Vergasers zugeführt wird, möglichst genau zu ermitteln und zu steuern. Hierbei ist davon auszugehen, daß moderne Vergaser heute stets mit mindestens zwei, am Umfang des Reaktors gleichmäßig verteilt angeordneten Brennern ausgerüstet sind, die gleichmäßig mit Brennstoff versorgt werden müssen.

In der DE-OS 3316368 ist deshalb bereits ein Verfahren zur Ermittlung und Überwachung des dem Vergaser zugeführten Brennstoff-Massenstromes vorgeschlagen worden, bei dem jeder Brenner des Vergasers über eine separate Leitung mit dem zentralen Zuteilbehälter für die Brennstoffzufuhr verbunden ist. Hierbei wird in jeder dieser Leitungen der mit einem Fluidisiergas geförderte Brennstoffstrom einer radiometrischen Dichtemessung und daran anschließend einer Differenzdruckmessung unterworfen. Aus den dabei erhaltenen Werten wird zusammen mit den Werten für das dem Zuteilbehälter zugeführte und aus diesem abgeführte Fluidisiergas in einem Prozeßrechner der Brennstoff-Massenstrom ermittelt.

Das in der Entgegenhaltung beschriebene Verfahren beschränkt sich jedoch nur auf die Ermittlung und überwachung des Brennstoff-Massenstromes, der den einzelnen Brennern des Vergasers zugeführt wird. Über die Steuerung dieses Massenstromes wird dagegen in der genannten Offenlegungsschrift nichts ausgesagt. Außerdem ist das dort beschriebene Verfahren auch apparativ recht aufwendig, da in jeder der zu den einzelnen Brennern des Vergasers führenden Leitungen eine radiometrische Dichtemessung durchgeführt werden muß.

Der Erfindung liegt deshalb die Aufgabe zugrunde, das bekannte Verfahren apparativ zu vereinfachen und so weiterzuentwickeln, daß auch die Steuerung der Brennstoffzufuhr zu den einzelnen Brennern des Vergasers unter Berücksichtigung der weiter oben beschriebenen Anforderungen mit einbezogen wird.

Das der Lösung dieser Aufgabe dienende Verfahren der eingangs genannten Art ist erfindungsgemäß dadurch gekennzeichnet, daß folgende Maßnahmen zur Anwendung gelangen :

a)      Der Brennstoff wird über eine einzige Austrittsleitung aus dem zentralen Zuteilbehälter abgezogen und gelangt in einen Verteiler, an den die Zuführungsleitungen zu den einzelnen Brennern des Vergasers angeschlossen sind, wobei die radiometrische Dichtemessung nur in der Austrittsleitung vom Zuteilbehälter zum Verteiler durchgeführt wird ;

b) der Brennstoff-Massenstrom in den Zuführungsleitungen zu den einzelnen Brennern wird in Abhängigkeit von der dort gemessenen Geschwindigkeit sowie der in der Austrittsleitung gemessenen Dichte ermittelt, wobei dem Brennstoff in den einzelnen Zuführungsleitungen kein zusätzliches Fördergas zugemischt wird und wobei die dort ermittelten Massenströme in einem Prozeßrechner zum Gesamtmassenstrom der Brennstoffzufuhr aus dem Zuteilbehälter zum Vergaser addiert werden, und

c) die im Vergaser erzeugte Rohgasmenge wird als Führungsgröße für die abgestufte Regelung des Gesamtmassenstromes benutzt.

Im Gegensatz zu der vorbekannten Arbeitsweise erfolgt beim erfindungsgemäßen Verfahren der Brennstoffabzug aus dem Zuteilbehälter also nur über eine einzige Austrittsleitung, in der die radiometrische Dichtemessung vorgenommen wird. Diese Leitung mündet in einen Verteiler, an den die Zuführungsleitungen zu den einzelnen Brennern des Vergasers angeschlossen sind. In diesen Zuführungsleitungen wird die Geschwindigkeit des in einem Trägergas fluidisierten Brennstoffstromes gemessen und aus dem dabei erhaltenen Wert wird unter Einbeziehung des Wertes für die Dichte, die in der Austrittsleitung aus dem Zuteilbehälter durch radiometrische Dichtemessung ermittelt wird, der Brennstoff-Massenstrom für die jeweilige Zuführungsleitung gemäß folgender Beziehung ermittelt :

$$M = S_R \cdot W \cdot F \cdot c,$$

wobei die einzelnen Indices folgende Bedeutung haben :

$S_R$ = Förderstromdichte in der Austrittsleitung,
$W$ = Geschwindigkeit in der jeweiligen Zuführungsleitung,
$F$ = Querschnitt der Meßstrecke zur Geschwindigkeitsmessung in der jeweiligen Zuführungsleitung und
$c$ = Korrekturfaktor zur Berücksichtigung der Stoffcharakteristik des geförderten Brennstoffes und zum Ausgleich von Meßungenauigkeiten der verwendeten Meßgeräte.

Hierbei werden $S_R$ in kg/m³, $W$ in m/s und $F$ in m² angegeben. Die in den einzelnen Zuführungsleitungen ermittelten Brennstoff-Massenströme werden sodann in einem Prozeßrechner zum Gesamtmassenstrom addiert.

Da die Größe des den Brennern des Vergasers insgesamt zugeführten Brennstoff-Massenstromes selbstverständlich die im Vergaser erzeugte Rohgasmenge beeinflußt, kann umgekehrt auch diese Rohgasmenge also Führungsgröße für den Gesamtmassenstrom benutzt werden. Hierfür ist erfindungsgemäß folgende abgestufte Regelung vorgesehen :

a) Bei einer Veränderung der erzeugten Rohgasmenge in der Größenordnung von ± 10% wird die erforderliche Veränderung des Gesamtmassenstromes durch Veränderung des Sollwertes der in den Zuführungsleitungen angeordneten Stellventile herbeigeführt ;

b) bei einer Veränderung der erzeugten Rohgasmenge in der Größenordnung von mehr als ± 10% sowie ≤ 50% (bezogen auf 100% Normalleistung) wird die erforderliche Veränderung des Gesamtmassenstromes durch Veränderung des Sollwertes der in den einzelnen Zuführungsleitungen angeordneten Stellventile und gleichzeitig durch abgestufte Veränderung des Differenzdruckes zwischen dem Zuteilbehälter und dem Vergaser herbeigeführt, und

c) bei einer Verringerung der erzeugten Rohgasmenge in der Größenordnung von > 50% (bezogen auf 100% Normalleistung) wird die erforderliche Veränderung des Gesamtmassenstromes durch Unterbrechung der Brennstoffzufuhr zu einzelnen Brennern und Abschaltung dieser Brenner herbeigeführt.

Gleichzeitig kann hierbei die im Abhitzekessel des Vergasers erzeugte Dampfmenge als Korrekturgröße für das Sauerstoff-Brennstoffverhältnis bei der Vergasung herangezogen werden.

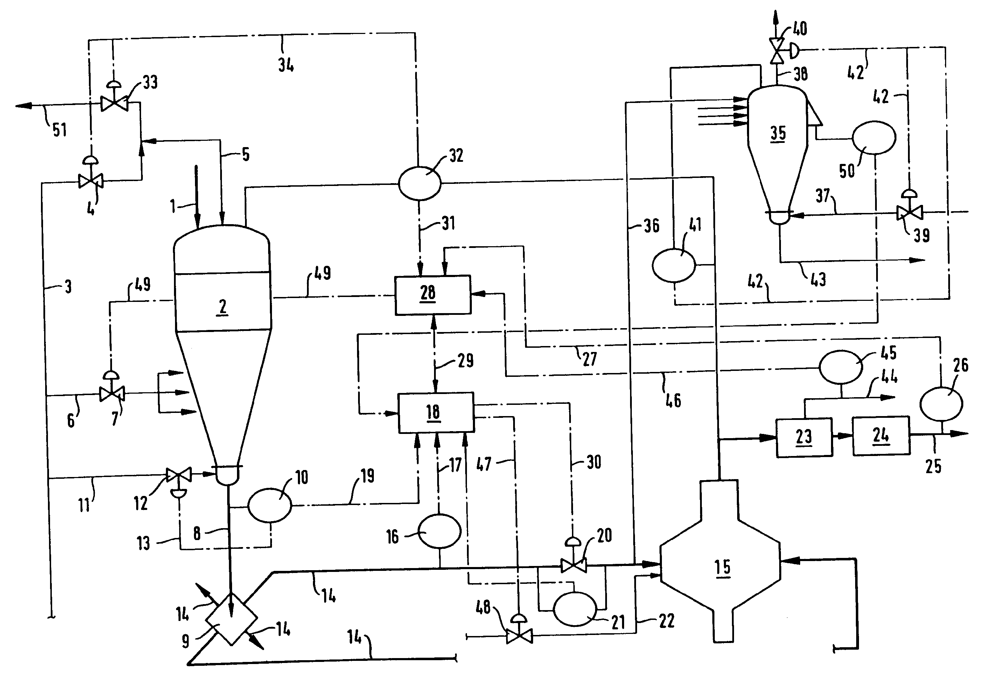

Weitere Einzelheiten des erfindungsgemäßen Verfahrens ergeben sich aus den vorliegenden Unteransprüchen und sollen nachfolgend an Hand des in der Abbildung dargestellten Fließschemas erläutert werden, das eine Anlage zur Durchführung des erfindungsgemäßen Verfahrens zeigt.

Hierbei wird der zur Vergasung kommende Brennstoff über die Leitung 1 in den Zuteilbehälter 2 eingeleitet. Die Brennstoffzufuhr erfolgt in an sich bekannter Weise zyklisch aus einem Schleusbehälter oder kontinuierlich durch Drucktopfförderer, die in der Abbildung nicht dargestellt sind. Im Zuteilbehälter 2 steht der Brennstoff fluidisiert unter einem Druck, der etwas höher ist als der Betriebsdruck des Vergasers 15. Hierfür wird dem Zuteilbehälter 2 über die Leitung 3 und das Druckregelventil 4 der erforderliche Gasstrom zugeführt und über die Leitung 5 von oben auf die Brennstoffschüttung aufgegeben. Als Gas können hierbei insbesondere $N_2$, $CO_2$ oder ein brennbares Gas, wie beispielsweise ein Teilstrom des erzeugten Partialoxidationsgases, verwendet werden. Von der Leitung 3 zweigt die Leitung 6 ab, durch die ein Teilstrom des Gases im Bereich des trichterförmig verjüngten Auslaufes in mehreren Ebenen in den Zuteilbehälter 2 eingeleitet wird. Hierdurch wird eine Brückenbildung des Brennstoffes beim Auslauf aus dem Zuteilbehälter 2 vermieden. Das Druckregelventil 7 dient dabei der Einstellung dieses Gasteilstromes. Die Größe des Gasteilstromes in Leitung 6 ist hierbei abhängig von der Leistung des Vergasers 15. Bei minimaler Leistung desselben entspricht dieser Gasteilstrom etwa 100% des für die pneumatische Zuteilung des Brennstoffes erforderlichen Bedarfs. Das Druckriegelventil 4 ist dann geschlossen, und über das Druckregelventil 33 strömt ein kleiner Überschuß an Gas ab. Bei voller Leistung des Vergasers 15 deckt der Gasteilstrom in Leitung 6 etwa ein Drittel des für die pneumatische Zuteilung des Brennstoffes und die Druckhaltung im Zuteilbehälter 2 erforderlichen Bedarfs. Das Druckregelventil 33 ist dann geschlossen. Die Anpassung des Gasteilstromes in Leitung 6 über das Druckregelventil 7 erfolgt in Abhängigkeit von der in der Meßeinrichtung 26 erfaßten Rohgasmenge, wobei über den Prozeßrechner 28 eine Verhältnisregelung erfolgt. Der Prozeßrechner 28 ist deshalb über die Impulsleitung 49 mit dem Druckregelventil 7 verbunden. Die Gaszufuhr zum Zuteilbehälter 2 wird insgesamt gesehen so eingestellt, daß sich im trichterförmig verjüngten Auslauf des Zuteilbehälters 2 eine gleichförmige Förderstromdichte des Brennstoff-Gasgemisches von 80-90% der Schüttdichte des Brennstoffes einstellt. Das aus dem Zuteilbehälter austretende Brennstoff-Gasgemisch gelangt über die Austrittsleitung 8 in den Verteiler 9. In der Austrittsleitung 8 ist dabei die radiometrische Dichtemessung 10 installiert. Der dort gemessene Wert kann über die Impulsleitung 13 zur Steuerung des Druckregelventiles 12 in der Leitung 11 genutzt werden, durch die ein weiterer Teilstrom des Gases aus der Leitung 3 in den untersten Teil des Auslaufes des Zuteilbehälters 2 eingeleitet werden kann. Dadurch kann die Dichte des auslaufenden Brennstoff-Gasgemisches in der Austrittsleitung 8 kontinuierlich im Bereich von etwa 40-90% der Schüttdichte des verwendeten Brennstoffes verändert und gleichzeitig die Gleichförmigkeit der Dichte verbessert werden. Über die Leitung 11 muß hierbei immer ein minimaler Gasteilstrom in den untersten Teil des Auslaufes des Zuteilbehälters 2 fließen, der zur Vermeidung einer Brückenbildung in diesem Bereich ausreicht.

Vom Verteiler 9 gegen die Zuführungsleitungen 14 zu den einzelnen Brennern des Vergasers 15 ab. Durch den Verteiler 9 wird dabei der Brennstoff auf mindestens zwei, bei erhöhter Vergaserleistung bis auf acht Zuführungsleitungen 14 gleichmäßig verteilt, wobei in den Zuführungsleitungen 14 auf die Zufuhr von zusätzlichem Fördergas verzichtet wird. In dem in der Abbildung dargestellten Fließschema sind insgesamt vier Zuführungsleitungen 14 vorgesehen. In der Meßeinrichtung 16 wird die Geschwindigkeit des durch die Zuführungsleitung 14 strömenden Brennstoff-Gasgemisches ermittelt und der dabei erhaltene Wert über die Impulsleitung 17 in den Prozeßrechner 18 eingegeben. In diesen wird über die Impulsleitung 19 auch der Wert der radiometrischen Dichtemessung 10 eingegeben, so daß der Brennstoff-Massenstrom in der Zuführungsleitung 14 nach der weiter oben angegebenen Beziehung im Prozeßrechner 18 ermittelt werden kann. In dem in der Abbildung dargestellten Fließschema ist die Meßeinrichtung 16 mit der dazugehörigen Impulsleitung 17 nur in einer Zuführungsleitung 14 eingezeichnet. Selbstverständlich sind die übrigen Zuführungsleitungen 14 auch in entsprechender Weise ausgerüstet, so daß in ihnen ebenfalls der Brennstoff-Massenstrom wie oben beschrieben ermittelt werden kann. Die hierbei erhaltenen Werte werden im Prozeßrechner 18 zum Gesamtmassenstrom addiert.

In den Zuführungsleitungen 14 ist jeweils hinter der Meßeinrichtung 16 ein Stellventil 20 installiert, durch das der Brennstoff-Massenstrom in der jeweiligen Zuführungsleitung 14 einreguliert und auf einem vorgegebenen Sollwert konstant gehalten werden kann.

Dem Stellventil 20 ist dabei jeweils ein Differenzdruckmesser 21 zugeordnet, durch den der Differenzdruck am Stellventil 20 überwacht werden kann. Dieser darf einen bestimmten Maximalwert nicht überschreiten, damit einerseits ein erhöhter Verschleiß am Stellventil 20 und andererseits eine Verstopfung der Zuführungsleitung 14 vermieden werden.

Im Vergaser 15 wird der Brennstoff in an sich bekannter Weise mit Sauerstoff oder einem Sauerstoff-Dampfgemisch durch Partialoxidation zu einem Partialoxidationsrohgas umgesetzt, das nach entsprechender Abkühlung und Gasbehandlung entweder als Synthese- oder als Brenngas verwendet werden kann. Bei dem Vergaser 15 kann es sich um eine bekannte Konstruktion handeln, in der beispielsweise die Vergasung in einer Flugstaubwolke bei Temperaturen oberhalb des Schlackeschmelzpunktes erfolgt. Die erforderlichen Reaktionsmedien (Sauerstoff, Wasserdampf) werden über die Leitung 22 den einzelnen Brennern des Vergasers 15 zugeführt. Das dort erzeugte Partialoxidationsrohgas gelangt über den Abhitzekessel 23 in die Gasreinigung 24 und wird anschließend über die Leitung 25 seiner weiteren Verwendung zugeführt, beispielsweise als Brenngas für die Gasturbine eines Gas- und Dampfturbinenkraftwerkes oder nach entsprechender Gasbehandlung als Synthesegas. Wie bereits weiter oben ausgeführt wurde, dient dabei die von der Meßeinrichtung 26 ermittelte Rohgasmenge als Führungsgröße für die abgestufte Regelung des Gesamtmassenstromes des dem Vergaser zugeführten Brennstoffes. Hierzu wird der in der Meßeinrichtung 26 ermittelte Wert über die Impulsleitung 27 in den Prozeßrechner 28 eingespeist, der mit dem Prozeßrechner 18 zu einer Einheit zusammengefaßt bzw. mit diesem durch die Datenübertragungsleitung 29 verbunden ist. Im Prozeßrechner 28 sind dabei die typischen Daten des verwendeten Brennstoffes und alle sonstigen für die Durchführung des Verfahrens relevanten Daten gespeichert.

Bei einer Veränderung der durch die Meßeinrichtung 26 ermittelten Rohgasmenge in der Größenordnung von ± 10% wird über die Impulsleitung 30 jeweils das Stellventil 20 in der Zuführungsleitung 14 in dem Sinne betätigt, daß bei einem Absinken der Rohgasmenge das Ventil stärker geöffnet und bei einem Ansteigen stärker gedrosselt wird, wodurch der Gesamtmassenstrom für die Brennstoffzufuhr zum Vergaser 15 innerhalb gewisser Grenzen geregelt werden kann.

Bei einer Veränderung der erzeugten Rohgasmenge in der Größenordnung von mehr als ± 10% sowie ≤ 50% (bezogen auf 100% Normalleistung) reicht die vorstehend beschriebene Regelung der Brennstoffzufuhr über die Stellventile 20 nicht mehr aus. In diesem Falle muß die erforderliche Veränderung des Gesamt-Massenstromes durch eine abgestufte Veränderung des Differenzdruckes zwischen dem Zuteilbehälter 2 und dem Vergaser 15 herbeigeführt werden. Bekanntlich ist der Druck im Zuteilbehälter 2 etwas höher als der Druck im Vergaser 15, so daß auf Grund dieser Druckdifferenz der Brennstoff über die Zuführungsleitungen 14 ohne zusätzliche Einspeisung von Fördergas in den Vergaser 15 transportiert werden kann. Die Druckdifferenz zwischen dem Zuteilbehälter 2 und dem Vergaser 15 ist dabei abhängig vom Massenstrom des Brennstoffes under der Förderstromdichte. Hierbei wird der in der Meßeinrichtung 26 ermittelte Wert im Prozeßrechner 28 in einen Steuerbefehl für den Differenzdruckmesser 32 umgewandelt und auf diesen über die Impulsleitung 31 übertragen. Der Differenzdruckmesser 32 mißt den Differenzdruck zwischen dem Zuteilbehälter 2 und dem Vergaser 15 und steuert über die Impulsleitung 34 die Druckregelventile 4 und 33. Soll der Differenzdruck erhöht und damit der Gesamtmassenstrom für die Brennstoffzufuhr zum Vergaser 15 vergrößert werden, so wird das Druckregelventil 4 in der Leitung 3 stärker geöffnet, wobei das Druckregelventil 33 geschlossen bleibt. Dadurch wird die Gaszufuhr zum Zuteilbehälter 2 vergrößert und damit der Differenzdruck entsprechend erhöht. Umgekehrt kann der Differenzdruck herabgesetzt werden, wenn bei geöffnetem Druckregelventil 33 überschüssiges Gas aus dem Zuteilbehälter 2 über die Leitung 34 abfließen kann. Bei einer stufenweisen Veränderung des Differenzdruckes, z.B. bei einer Verringerung um 0,5 bar, werden die Stellventile 20 zunächst versuchen, den vorher eingestellten Sollwert durch ein weiteres Öffnen zu halten. Dadurch würde jedoch der Differenzdruck an den Stellventilen 20 gegen Null konvergieren. Deshalb muß nach dem Einstellen des gewünschten Differenzdruckes zwischen dem Zuteilbehälter 2 und dem Vergaser 15 über den Prozeßrechner 18 eine Anpassung des Sollwertes für die Stellventile 20 vorgenommen werden. Die Größe dieser Sollwertanpassung hängt dabei von der Anzahl der im Betrieb befindlichen Brenner sowie der gewählten Differenzdruckveränderung zwischen dem Zuteilbehälter 2 und dem Vergaser 15 ab. Nach Vornahme dieser Sollwertanpassung schließen die Stellventile 20 wieder, und es stellt sich an ihnen wieder ein Differenzdruck ein, der den maximal zulässigen Wert nicht überschreitet.

Bei einer sprunghaften Verringerung der erzeugten Rohgasmenge in der Größenordnung von > 50% (bezogen auf 100% Normalleistung) erfolgt schließlich die erforderliche Veränderung des Gesamtmassenstromes durch Unterbrechung der Brennstoffzufuhr zu einzelnen Brennern und Abschaltung dieser Brenner. Umgekehrt müssen natürlich zusätzliche Brenner in Betrieb genommen werden, wenn die erzeugte Rohgasmenge in einer Größenordnung von > 50% (bezogen auf 100% Normalleistung) erhöht werden soll.

Damit durch die Abschaltung bzw. den Ausfall einzelner Brenner der vorgesehene Verfahrensablauf für die Gesamtanlage nicht beeinträchtigt wird und insbesondere der Brennstoff-Massenstrom und die Förderstromdichte in der Austrittsleitung 8 aus dem Zuteilbehälter 2 unverändert stabil gehalten werden können, ist erfindungsgemäß ein Pufferbehälter 35 vorgesehen. Durch die Förderung von Brennstoff aus einer oder mehreren Zuführungsleitungen 14 über die Leitung 36 in den Pufferbehälter 35 kann die gewünschte Stabilisierung des Brennstoff-Massenstromes und der Förderstromdichte in der Austrittsleitung 8 erreicht werden. Der Pufferbehälter 35 ist mit der Leitung 37 für die Gaszufuhr und der Leitung 38 für die Gasabfuhr ausgestattet, in denen die Druckregelventile 39 und 40 installiert sind. Mit Hilfe des Differenzdruckmessers 41, der über die Impulsleitung 42 mit den Druckregelventilen 39 und 40 in Verbindung steht, kann daher im Pufferbehälter 35 ein konstanter Differenzdruck zum Vergaser 15 eingestellt werden. Der Pufferbehälter 35 ermöglicht deshalb beim Anfahren der Anlage sowie bei erheblichen Leistungsveränderungen derselben in der Größenordnung von > 50% die Einstellung des erforderlichen Brennervordruckes und das druckstoßfreie Zuschalten der einzelnen Brenner. Überschüssiger Brennstoff kann über die Leitung 43 aus dem Pufferbehälter 35 abgezogen werden.

Der Pufferbehälter 35 kann auch zur Ermittlung des Korrekturfaktors c in der weiter oben angegebenen Beziehung zur Ermittlung des Brennstoff-Massenstromes mit herangezogen werden. Dieser Korrekturfaktor c setzt sich aus zwei Unterfaktoren gemäß der Beziehung

$$c = c_1 \times c_2$$

zusammen.

Der Unterfaktor $c_1$ ist dabei für alle Zuführungsleitungen 14 gleich und wird in bestimmten Zeitabständen, z.B. einmal täglich, durch einen Vergleich der Gesamtbrennstoff-Zufuhr zum Zuteilbehälter 2 mit dem im Prozeßrechner 18 errechneten Gesamtmassenstrom für die Brennstoffzufuhr über die Zuführungsleitungen 14 zum Vergaser 15 ermittelt. Durch den Unterfaktor $c_1$ werden dabei vor allem die spezifischen Einflüsse der Brennstoffqualität auf die Masenstrommessung ausgeglichen.

Der Unterfaktor $c_2$ muß dagegen nicht für alle Zuführungsleitungen 14 gleich sein. Durch ihn werden z.B. die Ungenauigkeiten der verwendeten Meßgeräte für die Dichte- und Geschwindigkeitsmessung ausgeglichen. Zur Ermittlung des Unterfaktors $c_2$ in der jeweiligen Zuführungsleitung 14 wird der in dieser Leitung fließende Brennstoff über die Leitung 36 in den Pufferbehälter 35 geleitet. Der Unterfaktor $c_2$ wird dann dadurch ermittelt, daß der in der Zuführungsleitung 14 ermittelte Wert für den Brennstoff-Massenstrom mit dem Wert der Empfangswägung 50 am Pufferbehälter 35 verglichen wird.

Der im Abhitzekessel 23, der mit dem Vergaser 15 zu einer baulichen Einheit zusammengefaßt sein kann, erzeugte Dampf wird über die Leitung 44 abgezogen. Die erzeugte Dampfmenge kann dabei von der Meßeinrichtung 46 erfaßt und der ermittelte Wert über die Impulsleitung 45 auf den Prozeßrechner 28 übertragen und in diesen als Korrekturgröße für das Sauerstoff-Brennstoffverhältnis bei der Vergasung ausgewertet werden. Weicht der so ermittelte Wert von dem vorgegebenen im Prozeßrechner 18 gespeicherten Sollwert ab, so wird über die Impulsleitung 47 das Stellventil 48 in der Leitung 22 betätigt und eine entsprechende Korrektur der Sauerstoffzufuhr herbeigeführt.

In der Abbildung sind die Leitungen 22 und 36 nur einmal dargestellt. Selbstverständlich sind in der Praxis diese Leitungen ebenso wie die Zuführungsleitung 14 für jeden Brenner vorgesehen. Grundsätzlich gilt im Hinblick auf die vorstehenden Ausführungen die Regel, daß alles, was im Bezug auf die Zuführungsleitung 14 und die Leitungen 22 und 36 gesagt wurde, für jede dieser Leitungen gilt, wobei deren Zahl jeweils der Zahl der Verwendeten Brenner entspricht.

**Patentansprüche**

1. Verfahren zur Ermittlung und Steuerung des Brennstoff-Massenstromes, der bei der Partialoxidation (Vergasung) von feinkörnigen bis staubförmigen Brennstoffen einem Vergaser mit mindestens zwei Brennern zugeführt wird, unter Anwendung einer radiometrischen Dichtemessung des mittels eines gasförmigen Mediums von einem zentralen Zuteilbehälter zu den einzelnen Brennern des Vergasers geförderten Brennstoffes sowie unter einsatz von Prozeßrechnern zur Durchführung der notwendigen Rechenoperationen, dadurch gekennzeichnet, daß folgende Maßnahmen zur Anwendung gelangen :

a) Der Brennstoff wird über eine einzige Austrittsleitung aus dem zentralen Zuteilbehälter abgezogen und gelangt in eine Verteiler, an den die Zuführungsleitungen zu den einzelnen Brennern des Vergasers angeschlossen sind, wobei die radiometrische Dichtemessung nur in der Austrittsleitung vom Zuteilbehälter zum Verteiler durchgeführt wird ;

b) der Brennstoff-Massenstrom in den Zuführungsleitungen zu den einzelnen Brennern wird in Abhängigkeit von der dort gemessenen Geschwindigkeit sowie der in der Austrittsleitung gemessenen Dichte ermittelt, wobei dem Brennstoff in den einzelnen Zuführungsleitungen kein zusätzliches Fördergas zugemischt wird und wobei die dort ermittelten Massenströme in einem Prozeßrechner zum Gesamtmassenstrom der Brennstoffzufuhr aus dem Zuteilbehälter zum Vergaser addiert werden und

c) die im Vergaser erzeugte Rohgasmenge wird als Führungsgröße für die abgestufte Regelung des Gesamtmassenstromes benutzt.

2. Verfahren nach Anspruch 1, dadurch gekennzeichnet, daß der Brennstoff-Massenstrom (M) in den Zuführungsleitungen zu den Brennern nach folgender Gleichung ermittelt wird :

$$M = S_R \cdot W \cdot F \cdot c,$$

wobei die einzelnen Indices folgende Bedeutung haben :

$S_R$ = Förderstromdichte in der Austrittsleitung,

W = Geschwindigkeit in der jeweiligen Zuführungsleitung,

F = Querschnitt der Meßstrecke zur Geschwindigkeitsmessung in der jeweiligen Zuführungsleitung und

c = Korrekturfaktor zur Berücksichtigung der Stoffcharakteristik des geförderten Brennstoffes und zum Ausgleich von Meßungenauigkeiten der verwendeten Meßgeräte.

3. Verfahren nach den Ansprüchen 1 und 2, dadurch gekennzeichnet, daß die abgestufte Regelung des Gesamtmassenstromes wie folgt durchgeführt wird :

a) Bei einer Veränderung der erzeugten Rohgasmenge in der Größenordnung von ± 10% wird die erforderliche Veränderung des Gesamtmassenstromes durch Veränderung des Sollwertes der in den Zuführungsleitungen angeordneten Stellventile herbeigeführt ;

b) bei einer Veränderung der erzeugten Rohgasmenge in der Größenordnung von mehr als ± 10% sowie ≤ 50% (bezogen auf 100% Normalleistung) wird die erforderliche Veränderung des Gesamtmassenstromes durch Veränderung des Sollwertes der in den einzelnen Zuführungsleitungen angeordneten Stellventile und gleichzeitig durch abgestufte Veränderung des Differenzdruckes zwischen dem Zuteilbehälter und dem Vergaser herbeigeführt und

c) bei einer Verringerung der erzeugten Rohgasmenge in der Größenordnung von > 50% (bezogen auf 100% Normalleistung) wird die erforderliche Veränderung des Gesamtmassenstromes durch Unterbrechung der Brennstoffzufuhr zu einzelnen Brennern und Abschaltung dieser Brenner herbeigeführt.

4. Verfahren nach den Ansprüchen 1 bis 3, dadurch gekennzeichnet, daß in der Austrittsleitung aus dem Zuteilbehälter eine gleichförmige Förderstromdichte des Brennstoff-Gasgemisches eingestellt wird, die 40-90% der Schüttdichte des verwendeten Brennstoffes entspricht.

5. Verfahren nach den Ansprüchen 1 bis 4, dadurch gekennzeichnet, daß an den Stellventilen in den Zuführungsleitungen zu den Brennern eine Differenzdruckmessung vorgesehen ist, durch die die Stellung der Ventile so geregelt werden kann, daß eine Verstopfung der Zuführungsleitungen und ein erhöhter Verschleiß der Ventile vermieden wird.

6. Verfahren nach den Ansprüchen 1 bis 5, dadurch gekennzeichnet, daß beim Ausfall oder Abschalten einzelner Brenner sowie beim Anfahren der Anlage Brennstoff-Gasgemisch aus den Zuführungsleitungen zu den einzelnen Brennern in einen Pufferbehälter abgeleitet wird, der unter einem konstanten Differenzdruck zum Vergaser steht.

7. Verfahren nach den Ansprüchen 1 bis 6, dadurch gekennzeichnet, daß die im Abhitzekessel des Vergasers erzeugte Dampfmenge als Korrekturgröße für das Sauerstoff-Brennstoffverhältnis bei der Vergasung benutzt wird.

**Claims**

1. Method for determining and controlling the mass flow of fuel which, during the partial oxidation (gasification) of fine-grained to pulverulent fuels, is supplied to a gasifier by at least two burners, using a radiometric density measurement of the fuel which is transported by a gaseous medium from a central distribution container to the individual burners of the gasifier, and using process computers for carrying out the required calculations, characterised in that the following measures are applied :

a) the fuel is withdrawn from the central distribution via a single outlet line and passes into a distributor to which are connected the supply lines to the individual burners of the gasifier, the radiometric density measurement being carried out only in the outlet line from the distribution container to the distributor ;

b) the mass flow of the fuel in the supply lines to the individual burners is determined as a function of the velocity measured there and of the density measured in the outlet line, no additional transport gas being added to the fuel in the individual supply lines and the mass flows determined there being summed in a process computer to give the total mass flow of the fuel supply from the distribution container to the gasifier, and

c) the quantity of crude gas generated in the gasifier is utilised as the reference variable for the graded control system for the total mass flow.

2. Method according to Claim 1, characterised in that the mass flow of the fuel (M) in the supply lines to the burners is determined from the following equation :

$$M = S_R \cdot W \cdot F \cdot c$$

where the individual symbols have the following meanings :

$S_R =$ transport stream density in the outlet line,
$W =$ velocity in the supply line in question,
$F =$ cross-section of the measuring section used for velocity measurement in the supply line in question, and
$c =$ correction factor to account for the physical characteristics of the fuel being transported and to compensate for measuring inaccuracies of the measuring equipment used.

3. Method according to Claims 1 and 2, characterised in that the graded control system for the total mass flow is carried out as follows :

a) for a change in the quantity of crude gas generated of the order of magnitude of ± 10% the required change in the total mass flow is brought about by changing the setpoint values of the control valves located in the supply lines ;

b) for a change in the quantity of crude gas generated of the order of magnitude of more than ± 10% and ≤ 50% (relative to 100% normal output) the required change in the total mass flow is brought about by changing the setpoint values of the control valves located in the individual supply lines and at the same time by graded change of the differential pressure between the distribution container and the gasifier, and

c) for a reduction in the quantity of crude gas generated of the order of magnitude of ± 50% (relative to 100% normal output) the required change in the total mass flow is brought about by shutting off the fuel supply to individual burners and switching off these burners.

4. Method according to Claims 1 to 3, characterised in that a uniform transport stream density of the fuel-gas mixture, which corresponds to 40-90% of the bulk density of the fuel used, is set up in the outlet line from the distribution container.

5. Method according to Claims 1 to 4, characterised in that differential pressure measurements, by which the positions of the valves can be controlled so that blocking of the supply lines and increased wear of the valves is avoided, are provided at the control valves in the supply lines to the burners.

6. Method according to Claims 1 to 5, characterised in that on failure or switching off of individual burners and on start-up of the plant fuel-gas mixture from the supply lines to the individual burners is diverted to a buffer container which is at a constant differential pressure in relation to the gasifier.

7. Method according to Claims 1 to 6, characterised in that the quantity of steam generated in the waste heat boiler of the gasifier is utilised as a correction parameter for the oxygen-fuel ratio during gasification.


**Revendications**

1. Procédé pour la détermination et le contrôle du débit massique du combustible, qui lors de l'oxydation partielle (gazéification) de combustibles allant du grain fin à la poussière, est amené à un gazéificateur avec deux brûleurs au moins, avec application d'un mesurage radiométrique de la densité du combustible transporté par un milieu gazeux d'un récipient central de dosage vers les différents brûleurs du gazéificateur et avec utilisation d'un ordinateur industriel pour le calcul des opérations mathématiques, caractérisé par le fait que les mesures suivantes sont appliquées :

a) Le combustible est prélevé dans un récipient central de dosage par un seul conduit de sortie et est amené dans un répartiteur auquel sont raccordés les conduits d'alimentation des différents brûleurs du gazéificateur. Le mesurage radiométrique de la densité n'est effectué que dans le conduit de sortie allant du récipient de dosage vers le répartiteur ;

b) le débit massique du combustible dans les conduits d'alimentation des différents brûleurs est déterminé en fonction de la vitesse qui y est mesurée ainsi que de la densité mesurée dans le conduit de sortie. Dans les différents conduits de sortie, le combustible n'est pas additionné de gaz de transport supplémentaire et les débits massiques qui y sont déterminés sont additionnés dans un ordinateur industriel pour donner le débit massique total de l'alimentation en carburant allant du récipient de dosage au gazéificateur et

c) la quantité de gaz brut produit dans le gazéificateur est utilisée comme grandeur de référence pour la régulation graduée du débit massique total.

2. Procédé selon la revendication 1, caractérisé par le fait que le débit massique du combustible (M) dans les conduits d'alimentation des brûleurs est déterminé selon l'équation suivante :

$$M = S_R \cdot W \cdot F \cdot c,$$

les différents indices ayant les significations suivantes :

$S_R$ = densité du flux transporteur dans le conduit de sortie,

$W$ = vitesse dans le conduit d'alimentation correspondant,

$F$ = section du parcours de mesurage pour mesurer la vitesse dans le conduit d'alimentation correspondant et

$c$ = facteur de correction pour la prise en compte des caractéristiques matérielles du combustible transporté et pour la compensation des imprécisions de mesurage des appareils de mesures utilisés.

3. Procédé selon les revendications 1 et 2, caractérisé par le fait que la régulation graduée du débit massique total est effectué comme suit :

a) En cas de changement de la quantité produite de gaz brut de l'ordre de ± 10%, le changement nécessaire du débit massique total est provoqué par le changement de la valeur de consigne des vannes de régulation disposées dans les conduits d'alimentation ;

b)      en cas de changement de la quantité produite de gaz brut de plus de $\pm$ 10% ainsi que de $\leq$ 50% (par rapport à 100% de rendement normal), le changement nécessaire du débit massique total est provoqué par le changement de la valeur de consigne des vannes de régulation disposées dans les conduits d'alimentation en même temps que par le changement graduel de la pression différentielle entre le récipient de dosage et le gazéificateur, et

c)      en cas de diminution de la quantité produite de gaz brut de l'ordre de > 50% (par rapport à 100% de rendement normal), le changement nécessaire du débit massique total est provoqué par l'interruption de l'alimentation en combustible de différents brûleurs et par la coupure de ces brûleurs.

4. Procédé selon les revendications 1 à 3, caractérisé par le fait que la densité réglée du flux de transport du mélange combustible-gaz dans le conduit de sortie du récipient de dosage correspond à 40-90% de la densité de déversement du combustible utilisé.

5. Procédé selon les revendications 1 à 4, caractérisé par le fait qu'à l'endroit des vannes de régulation dans les conduits d'alimentation des brûleurs un mesurage de la pression différentielle est prévu, par lequel la position des vannes peut être réglée de telle sorte qu'un bouchage des conduits d'alimentation et une usure accrue des vannes sont évités.

6. Procédé selon les revendications 1 à 5, caractérisé par le fait que lors d'un arrêt ou d'une coupure de différents brûleurs ainsi que lors de la mise en marche de l'installation, du mélange combustible-gaz est dévié des conduits d'alimentation des différents brûleurs vers un récipient tampon, qui se trouve sous une pression différentielle constante par rapport au gazéificateur.

7. Procédé selon les revendications 1 à 6, caractérisé par le fait que la quantité de vapeur produite dans la chaudière de récupération du gazéificateur est utilisée comme grandeur de correction du rapport oxygène-combustible lors de la gazéification.